# EUROPEAN PATENT SPECIFICATION

(11) **EP 3 971 547 B1**
(45) Date of publication and mention of the grant of the patent: **27.03.2024**
(21) Application number: 21174739.9
(22) Date of filing: 19.05.2021
(51) Int. Cl.: G01L 9/00, G01L 19/14

(54) **ELECTRONIC PRESSURE SENSOR WITH IMPROVED SEALING SYSTEM**
ELEKTRONISCHER DRUCKSENSOR MIT VERBESSERTEM DICHTUNGSSYSTEM
CAPTEUR DE PRESSION ÉLECTRONIQUE ÉQUIPÉ D'UN SYSTÈME D'ÉTANCHÉITÉ AMÉLIORÉ

(30) Priority: 21.09.2020 IT 202000022210
(43) Date of publication of application: 23.03.2022
(73) Proprietor: Brimind S.r.l., 24060 Bolgare (Bergamo) (IT)
(72) Inventor: LEO, Leonardo Claudio, 25065 Lumezzane (Brescia) (IT)
(74) Representative: Petruzziello, Aldo

(56) References cited:
- EP-A1- 3 270 133
- EP-A1- 3 279 631
- US-A1- 2005 028 603
- US-A1- 2012 104 518

## Description

The subject of the present invention is an electronic pressure sensor with an improved sealing system usable for any type of fluid: gas or liquid.

An electronic pressure sensor comprises, in its essential parts, an external body, normally in metal, with a threaded fitting for connection to the source of fluid to be measured, in which are contained a support, normally in plastic or metal, for a ceramic cell carrying the pressure-sensitive part, and an electrical connector from which the measured data can be taken. The pressure-sensitive part is normally made up of a membrane consisting of a lower plate of minimal thickness of said ceramic cell, with the possibility of fluctuating as the pressure of the fluid changes.

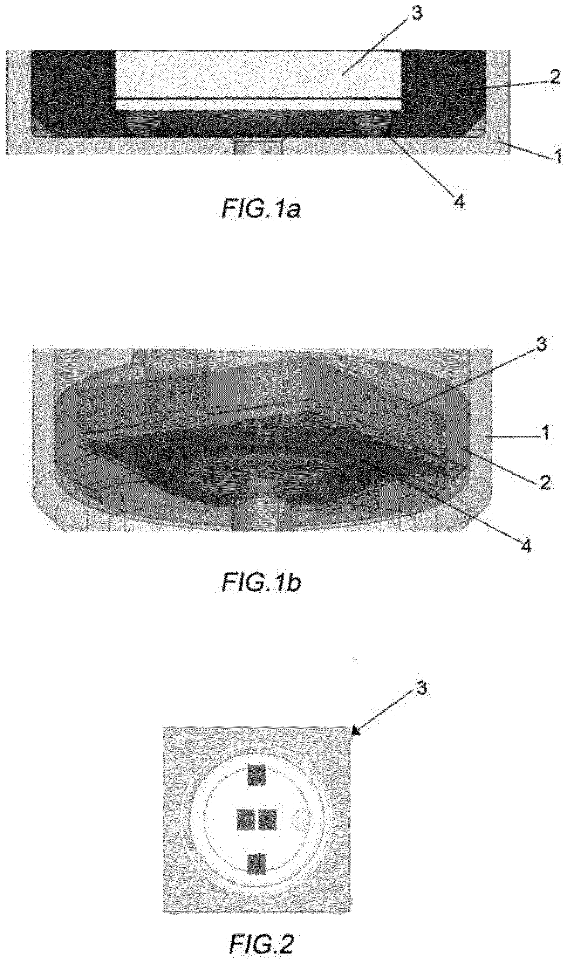

In such known pressure sensors, the fluid tightness is guaranteed by applying between the metal or plastic body and the ceramic cell carrying the pressure-sensitive element a suitably sized gasket or an O-ring, as schematically shown in the accompanying Figures 1a and 1b, where the metal body is denoted by reference numeral 1, the plastic or metal mechanical support by reference numeral 2, the ceramic cell with the pressure-sensitive element by 3 and the O-ring by 4.

According to this embodiment, the O-ring 4 goes to seal against both the metal containment body 1 and/or the plastic or metal support and against the ceramic cell 3, with respect to the fluid that impacts the ceramic cell with the sensitive membrane from below.

However, such a solution has the following disadvantages:
- The sizing of the O-ring or gasket sealing system must not interfere with the sensitive part so that relatively large dimensions are required, resulting in applied force values that increase exponentially as the surface area and pressure increase.
- The seal of the gasket or O-ring is ensured by axial deformation/compression of the same, with consequent permanent deformation of the gasket and therefore possible cause of loss of seal over time due to natural ageing of the elastomer.
- Finally, a "pump" effect of the entire system can be seen as the pressure present and/or applied varies, and the dimensional expansions as the temperature of the various materials/components present varies become very influential.

In order to avoid the disadvantages due to the sealing gasket, the European patent application EP 3270133A1 proposes gluing of the ceramic cell with the sensitive membrane to the relative support in plastic or in metal. Gluing takes place over a peripheral area leaving a central circular area free of glue to allow the membrane to bend.

The accompanying Figure 2 shows schematically in a plan view from above the ceramic cell 3 in which the surface of application of the epoxy glue is shown in grey, while the central clear circular area represents the area free from glue that allows bending of the membrane on which are screen-printed four resistors of a Wheatstone bridge arranged in the configuration shown in transparency in the drawing. The deformation in extension or compression of the resistors integral with the membrane allows the responses of the bridge to variations in pressure of the fluid to be obtained.

As can be seen from the drawing, the arrangement of the resistors of the bridge is such that two of them are arranged centrally and close to each other and two others are arranged radially outwards, the two pairs of resistors being positioned on lines perpendicular to each other.

The glue must guarantee a perfect seal and adhesion to the support body of the ceramic cell, whether made of plastic or metal, and at the same time allow the bending of the membrane.

In the case of applications with pressures of approximately 50 bar and working temperatures from -40°C to +140°C, the choice of glue is of the epoxy type with a transaction temperature higher than 150°C. Consequently, once cured, the glue becomes extremely rigid. Having to size and position the resistors in the clear area free from glue that makes the membrane rigid, it was found that the resistors positioned externally and further away from the centre are strongly influenced and become unstable due to the proximity to the presence of glue and this causes strong rigidity of the membrane itself.

The result is a non-linear behaviour of the signal in output of the bridge, both with the varying of the pressure and with the varying of the temperature. Moreover, the precision tolerance becomes very high at P=K (constant) in the various temperature points, varying considerably as the temperature varies up or down, without a linear behaviour and even less so repetitive.

Other pressure sensors are known from EP 3279631 A1, US 2012/104518 A1 and US 2005/028603 A1.

The object of the invention is to eliminate the aforementioned disadvantages.

In particular, an object of the invention is to provide an electronic pressure sensor with a sealing system obtained by gluing of the ceramic cell to the relative support, which does not affect the behaviour of the bridge resistors screen-printed on the sensitive membrane.

Another object of the invention is to provide such a pressure sensor which does not therefore have the disadvantages of the gasket or O-ring subject to axial loads and of permanent mechanical compression.

Yet another object of the invention is to provide a pressure sensor with such a sealing system that is simple and economical to produce and reliable over time.

These objects are achieved by the electronic pressure sensor with improved sealing system according to the invention that has the features of the appended independent claim 1.

Advantageous embodiments of the invention are disclosed in the dependent claims.

Substantially, the electronic pressure sensor according to the invention comprises a body (20) that can be connected on one side to a fluid source and housing on the opposite side a mechanical support (30) for a ceramic cell (40) with a pressure-sensitive element and an electrical connector element (50) coupled to said pressure-sensitive element (41), wherein said ceramic cell (40) is of square shape and comprises a lower plate of minimal thickness or membrane (41) constituting said pressure-sensitive element and an upper plate (42) of greater thickness, on said sensitive membrane (41) being placed four resistors (R1, R2, R3, R4) of a Wheatstone bridge, with two resistors (R1, R2) arranged centrally and close to each other and the other two resistors (R3, R4) arranged radially distant towards the exterior, wherein the line joining the two most distant resistors (R3, R4) is placed along a diagonal of the square and said ceramic cell (40) is glued to the support (30) in a perimeter zone (70; 70') such as to leave a central area containing said resistors (R1-R4) free from glue of square or elliptical shape.

Further features of the invention will be made clearer by the detailed description that follows, referred to an embodiment of the invention purely by way of a non-limiting example, illustrated in the accompanying drawings, in which:
Figures 1a and 1b are partial schematic views, in section and perspective from below respectively, of an electronic pressure sensor with a gasket or O-ring sealing system according to the prior art;
Figure 2 is a schematic plan view from above, of a system of sealing by gluing of an electronic pressure sensor according to the prior art, with the Wheatstone bridge resistors shown in transparency;
Figures 3 and 4 are, respectively, a blown-up view and an overall sectional view of an electronic pressure sensor according to the invention;
Figure 4a is an enlargement of the central part of Figure 4, showing the attachment of the ceramic cell to the relative support;

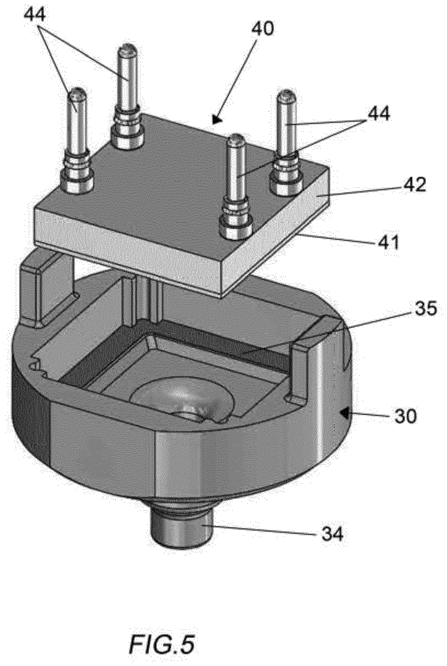

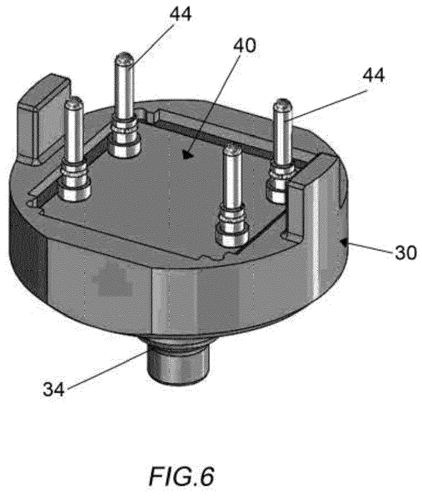

Figures 5 and 6 are enlarged perspective views showing the ceramic cell with sensing element before and after fixing with glue in a relative support;
Figure 7 is a plan view from above of Figure 6 with parts shown in transparency;
Figure 8 is a plan view from above of only the support for the ceramic cell;
Figure 9 is a schematic plan view like that of Figure 7, except for a different orientation of the ceramic cell, to better show the arrangement of the resistors of the bridge;
Figure 10 is a perspective view from above of the configuration of Figure 9;
Figure 11 is a schematic median section view of the ceramic cell fixed to the support, as shown in Figure 9;
Figure 12 is a schematic plan view showing a possible different arrangement of the glue between the ceramic cell and the support.

The electronic pressure sensor that is the subject of the present invention is of the same type as that described in European patent application EP 3270133A1 mentioned above, to which reference may be made for the technical features of the same. However, a brief description will be given here below of an example structure of the sensor.

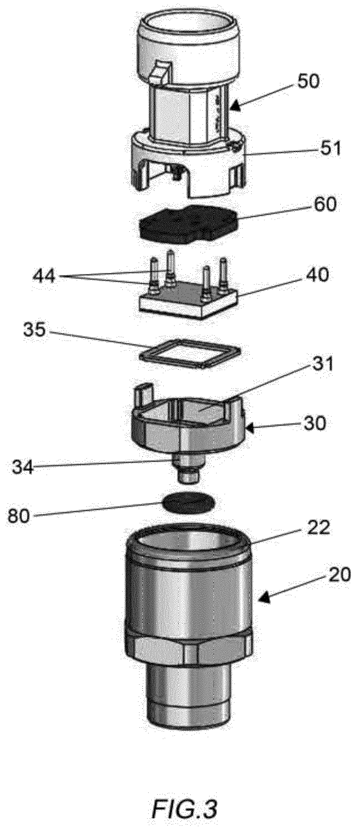

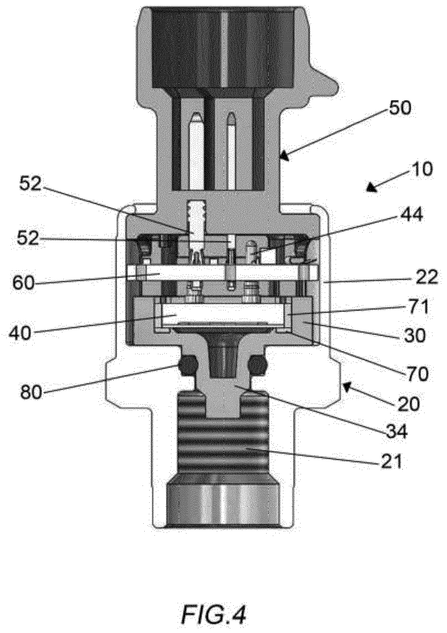

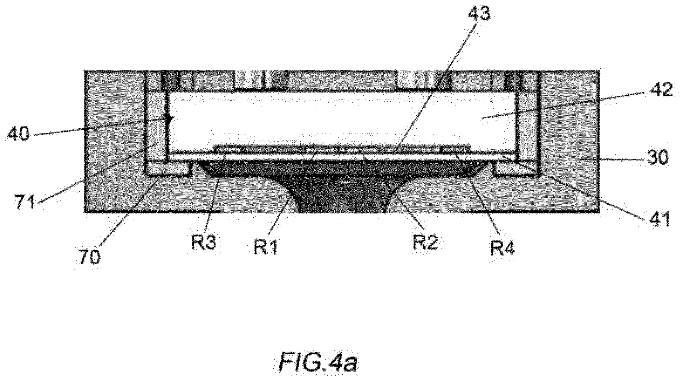

Referring to Figures 3 and 4, an electronic pressure sensor according to the invention has been denoted as a whole by reference numeral 10.

It comprises a normally metal body 20, having on one side, the lower one with reference to the drawings, a threaded connection 21 for connection to the source of fluid whose pressure is to be measured and, on the opposite side, a socket housing 22 suitable for containing the components of the sensor.

More particularly, the body 20 houses a mechanical support 30, generally in plastic or also metal material, provided with a seat or cavity 31 for housing a ceramic plate or cell 40 with a pressure-sensitive element, subject to possible arrangement in the seat 31 of a plastic frame 35.

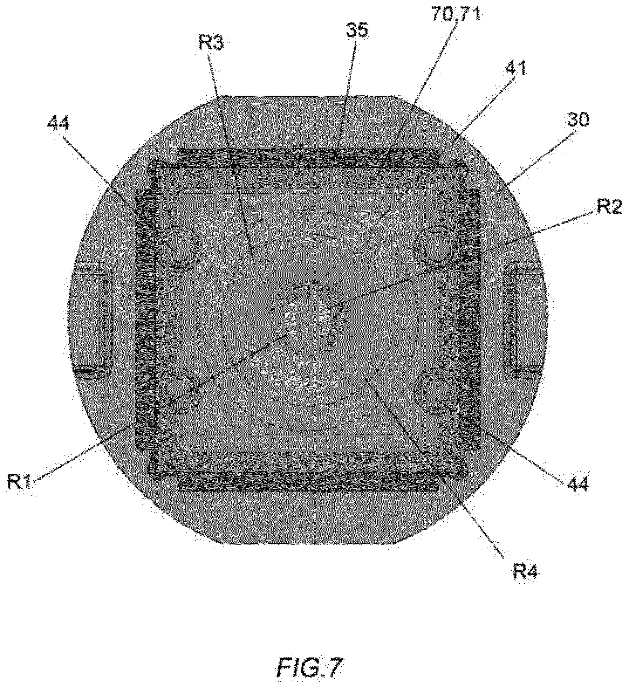

In the embodiment shown in the drawings, the ceramic cell 40, square in shape, is made up of two superimposed plates, a lower one 41 of relatively minimal thickness and an upper one 42 of greater thickness. The plate 41 of minimal thickness, which will also be referred to as membrane, is the pressure-sensitive element. On it, four resistors R1, R2, R3, R4, shown in transparency in Figures 7, 9, 10, are positioned, as will be explained in greater detail here below, forming a Wheatstone bridge, whose resistance variation is indicative of the deformation of the membrane subjected to pressure, which is then converted into an electrical quantity.

As can be seen from the enlargement of Figure 4a, the four resistors, preferably screen-printed on the ceramic membrane 41, are housed in a cavity 43 obtained below the upper plate 42 so as to be able to undergo small displacements as a result of the deformation of the membrane when the pressure of the fluid varies.

In Figure 4a, purely for illustrative purposes, the four resistors R1-R4 are shown not in the exact arrangement of Figures 7, 9, 10.

An electrical connector element 50 is then applied on the cell 40, having a widened base 51, which is enclosed within the socket housing 22 of the metal body 20.

The connector element 50 has pins 52 which come into contact with a printed circuit board (PCB) 60, with which pins 44 carried by the ceramic cell 40 also come into contact in order to establish an electrical connection between the resistors R1-R4 of the sensitive membrane 41 and the connector element 50.

The connector element 50 can be connected to a complementary connector element for detecting, transferring and managing the measurement data.

The sealing system according to the invention can be seen more clearly in Figures 4, 7 - 11.

As shown in Figures 7, 9, 10, and as disclosed in the preamble of this application, the Wheatstone bridge comprises two resistors R1, R2 placed centrally and close one to the other and two other resistors R3, R4 placed radially distant towards the exterior, the two pairs of resistors being positioned on directrices perpendicular one to the other, so as to form a sort of rhombus.

According to the invention, the two pairs of bridge resistors R1, R2 and R3, R4 are no longer placed according to the classical orientation shown in Figure 2, i.e. parallel and together orthogonal to the four sides of the square ceramic sensitive part 41 of the ceramic cell 40, but instead placed and aligned along a diagonal of the square, as can be seen in Figures 7, 9, 10. More precisely, the line joining the two most distant resistors R3, R4 is placed along a diagonal.

According to the invention, the ceramic cell 40 with the pressure-sensitive membrane 41 is glued to the mechanical support 30, such that it becomes one piece with it.

In order to avoid the problems previously disclosed due to the proximity of the external resistors R3, R4 to the area of gluing of the ceramic cell, involving an area arranged around a central circular area (Fig. 2), according to the invention the glue is distributed along a square perimeter frame 70 developing between the lower face of the ceramic cell 40 and the mechanical support 30.

Such an arrangement of the glue makes it possible to considerably increase the distance of the outermost resistors R3, R4, placed along the diagonal of the square, from the zone which has become extremely rigid and constrained due to the presence of structural glue, with an increase in the clear zone.

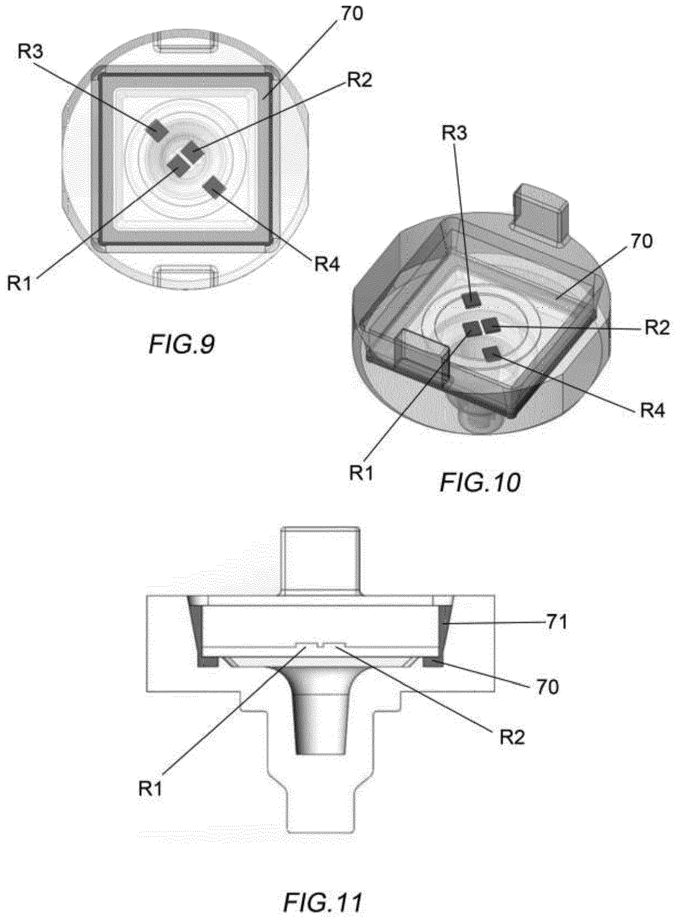

Advantageously, the glue is distributed, with a layer 71, also along the lateral perimeter edge of the ceramic cell 40, as can be seen in Figures 4, 4a and 11, so as to create a monobloc that ensures perfect tightness both at the mechanical level and at the level of leaks and seepages.

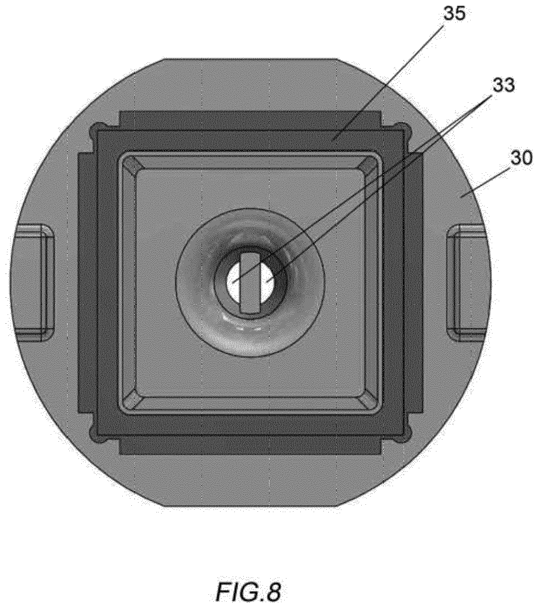

From the plan view in Figure 8 of the mechanical body 30, the holes 33 for the passage of the fluid that goes to impact the ceramic cell 40 can also be seen.

The mechanical support 30 has a discoidal shape, with a stem 34 that extends downwards, in which the aforementioned holes 33 for the passage of the fluid are formed.

The seal between the mechanical support 30 and the metal body 20 is achieved by means of an O-ring 80, placed around the stem 34 which works radially.

The advantages resulting from the arrangement of the glue and arrangement of the resistors of the bridge according to the invention are considerable:
- The stiffening of the sensitive membrane 41 caused by the use of structural epoxy glue is eliminated, leaving the resistors most external from the centre R3, R4 free to deform;
- A linearity comparable to that which would be obtained with no constraints on the membrane is obtained;
- The repeatability of the measurement becomes excellent;
- The class of precision of the electronic sensor improves considerably;
- The reduction in costs of both the components and of the production process obtains considerable advantages therefrom if compared with a system that uses the same technique and the same production process, considering that, in order to obtain the same distance and freedom of deformation of the external resistors, it would be necessary to increase the size of the sensitive element and of all the components of the electronic sensor by more than 50%.

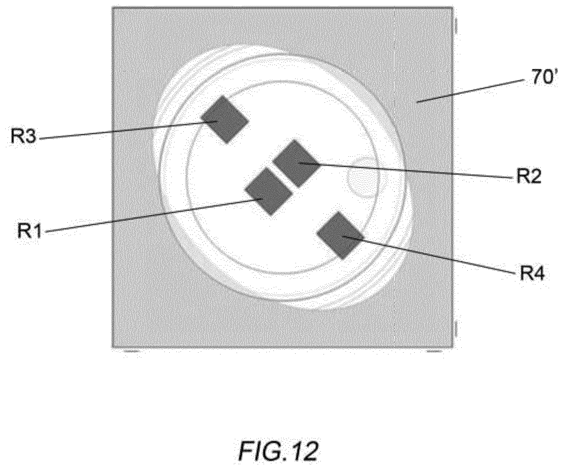

The advantages of the diagonal arrangement of the resistors of the bridge, with the glue arrangement that allows a square clear area to be obtained, can also be obtained with an arrangement 70' of the glue, which leaves a clear area of substantially ellipsoidal shape, with the greater axis of the ellipse placed along the line joining the external resistors R3, R4, as shown in Figure 12.

Naturally, the materials of the above-mentioned components may be different from those indicated. Thus, for example, the plate or pressure-sensitive part membrane can be made, as well as in ceramic, in glass composites, metal composites and the like.

Naturally, the invention is not limited to the particular embodiment described above and illustrated in the accompanying drawings, but numerous detailed changes may be made thereto within the reach of the person skilled in the art, without departing from the scope of the invention itself, as defined by the appended claims.

## Claims

1. Electronic pressure sensor comprising a body (20) connectable on one side to a fluid source and housing on the opposite side; a ceramic cell (40) with a pressure sensitive element (41); a mechanical support (30) for the ceramic cell (40), the body (20) housing the mechanical support (30); and an electrical connector element (50) coupled to said pressure-sensitive element (41), wherein said ceramic cell (40) is square in shape and is made up of two superimposed plates comprising a lower thin plate or membrane (41) constituting said pressure-sensitive element and an upper plate (42) of greater thickness, on said sensitive membrane (41) being arranged four resistors (R1, R2, R3, R4) of a Wheatstone bridge, with two resistors (R1, R2) arranged centrally and close one to the other and the others two resistors (R3, R4) arranged radially distant towards the exterior,
**characterised in that** the line joining the two most distant resistors (R3, R4) is arranged along a diagonal of the square and that said ceramic cell (40) is glued to the support (30) in a perimeter area (70; 70') such as to leave a central area containing said resistors (R1-R4) free from glue, having a square shape having its diagonal coincident with said diagonal of the square or an elliptical shape, with the major axis of the ellipse coincident with said diagonal of the square.

2. Electronic pressure sensor according to claim 1, **characterised in that** said glued perimeter area is constituted by a square perimeter frame (70) developing between the lower face of the ceramic cell (40) and the mechanical support (30).

3. Electronic pressure sensor according to claim 1 or 2, **characterised in that** said gluing area extends, with a layer (71), along the lateral perimeter edge of said ceramic cell (40).

4. Electronic pressure sensor according to any one of the preceding claims, **characterised in that** the four resistors (R1-R4) are screen-printed on the ceramic membrane (41) of the ceramic cell (40).

5. Electronic pressure sensor according to any one of the preceding claims, **characterised in that** said four resistors (R1-R4) are housed in a cavity (43) formed below said upper plate (42) of the ceramic cell (40) so as to be able to undergo small displacements as a result of the deformation of the membrane as the fluid pressure varies.

6. Electronic pressure sensor according to any one of the preceding claims, **characterised in that** said pressure-sensitive element (41) is in ceramic, glass composites, metal composites and the like.

7. Electronic pressure sensor according to any one of the preceding claims, **characterised in that** an O-ring (80), working radially, is arranged around a stem (34) projecting below from said mechanical support (30) and sealing against an internal wall of said body (20).

8. Electronic pressure sensor according to any one of the preceding claims, wherein holes (33) are provided in said stem (34) of the mechanical support element (30) for the passage of the fluid towards the pressure-sensitive element (41).

9. Electronic pressure sensor according to any one of the preceding claims, wherein said mechanical support (30) is in plastic or metal material.

## Patentansprüche

1. Elektronischer Drucksensor, umfassend einen Körper (20), der auf einer Seite mit einer Fluidquelle verbindbar ist und ein Gehäuse auf der gegenüberliegenden Seite; eine Keramikzelle (40) mit einem druckempfindlichen Element (41); einen mechanischen Träger (30) für die Keramikzelle (40), wobei der Körper (20) den mechanischen Träger (30) aufnimmt; und ein elektrisches Verbinderelement (50), das mit dem druckempfindlichen Element (41) gekoppelt ist, wobei die Form der Keramikzelle (40) quadratisch ist und aus zwei übereinanderliegenden Platten besteht, die eine untere dünne Platte oder Membran (41), die das druckempfindliche Element bildet, und eine obere Platte (42) mit größerer Dicke umfassen, wobei auf der empfindlichen Membran (41) vier Widerstände (R1, R2, R3, R4) einer Wheatstone-Brücke angeordnet sind, wobei zwei Widerstände (R1, R2) zentral angeordnet sind und einander nahe sind und die anderen zwei Widerstände (R3, R4) radial nach außen beabstandet angeordnet sind,
**dadurch gekennzeichnet, dass** die Linie, die die zwei am weitesten entfernten Widerstände (R3, R4) zusammenfügt, entlang einer Diagonalen des Quadrats angeordnet ist und dadurch, dass die Keramikzelle (40) an den Träger (30) in einem Umfangsbereich (70; 70') so geklebt ist, dass ein zentraler Bereich, der die Widerstände (R1-R4) enthält, frei von Klebstoff bleibt, aufweisend eine quadratische Form, deren Diagonale mit der Diagonalen des Quadrats zusammenfällt, oder eine elliptische Form, wobei die Hauptachse der Ellipse mit der Diagonalen des Quadrats zusammenfällt.

2. Elektronischer Drucksensor nach Anspruch 1, **dadurch gekennzeichnet, dass** der verklebte Umfangsbereich durch einen quadratischen Umfangsrahmen (70) gebildet ist, der sich zwischen der Unterseite der Keramikzelle (40) und dem mechanischen Träger (30) entwickelt.

3. Elektronischer Drucksensor nach Anspruch 1 oder 2, **dadurch gekennzeichnet, dass** sich der Klebebereich mit einer Schicht (71) entlang der seitlichen Umfangskante der Keramikzelle (40) erstreckt.

4. Elektronischer Drucksensor nach einem der vorhergehenden Ansprüche, **dadurch gekennzeichnet, dass** die vier Widerstände (R1-R4) auf die Keramikmembran (41) der Keramikzelle (40) siebgedruckt sind.

5. Elektronischer Drucksensor nach einem der vorhergehenden Ansprüche, **dadurch gekennzeichnet, dass** die vier Widerstände (R1-R4) in einem Hohlraum (43) untergebracht sind, der unter der oberen Platte (42) der Keramikzelle (40) ausgebildet ist, um kleine Verschiebungen als Ergebnis der Verformung der Membran erfahren zu können, wenn sich der Fluiddruck ändert.

6. Elektronischer Drucksensor nach einem der vorhergehenden Ansprüche, **dadurch gekennzeichnet, dass** das druckempfindliche Element (41) aus Keramik, Glasverbundwerkstoffen, Metallverbundwerkstoffen und dergleichen besteht.

7. Elektronischer Drucksensor nach einem der vorhergehenden Ansprüche, **dadurch gekennzeichnet, dass** ein O-Ring (80), der radial arbeitet, um einen Schaft (34) herum angeordnet ist, der unten von dem mechanischen Träger (30) vorsteht und gegen eine Innenwand des Körpers (20) abdichtet.

8. Elektronischer Drucksensor nach einem der vorhergehenden Ansprüche, wobei Löcher (33) in dem Schaft (34) des mechanischen Trägerelements (30) für den Durchgang des Fluids in Richtung des druckempfindlichen Elements (41) vorgesehen sind.

9. Elektronischer Drucksensor nach einem der vorhergehenden Ansprüche, wobei der mechanische Träger (30) aus Kunststoff- oder Metallmaterial besteht.

## Revendications

1. Capteur de pression électronique comprenant un corps (20) pouvant être relié d'un côté à une source de fluide et un boîtier du côté opposé ; une cellule céramique (40) avec un élément sensible à la pression (41) ; un support mécanique (30) pour la cellule céramique (40), le corps (20) logeant le support mécanique (30) ; et un élément de connexion électrique (50) couplé audit élément sensible à la pression (41), dans lequel ladite cellule céramique (40) est de forme carrée et est constituée de deux plaques superposées comprenant une plaque ou membrane inférieure mince (41) constituant ledit élément sensible à la pression et une plaque supérieure (42) de plus grande épaisseur, sur ladite membrane sensible (41) étant disposées quatre résistances (R1, R2, R3, R4) d'un pont de Wheatstone, avec deux résistances (R1, R2) disposées au centre et proches l'une de l'autre et les deux autres résistances (R3, R4) disposées radialement éloignées vers l'extérieur,
**caractérisé en ce que** la ligne reliant les deux résistances les plus éloignées (R3, R4) est disposée le long d'une diagonale du carré et **en ce que** ladite cellule céramique (40) est collée au support (30) dans une zone périmétrale (70 ; 70') de manière à laisser une zone centrale contenant lesdites résistances (R1-R4) sans colle, ayant une forme carrée dont la diagonale coïncide avec ladite diagonale du carré ou une forme elliptique, le grand axe de l'ellipse coïncidant avec ladite diagonale du carré.

2. Capteur de pression électronique selon la revendication 1, **caractérisé en ce que** ladite zone périmétrale collée est constituée d'un cadre périmétral carré (70) se développant entre la face inférieure de la cellule céramique (40) et le support mécanique (30).

3. Capteur de pression électronique selon la revendication 1 ou 2, **caractérisé en ce que** ladite zone de collage s'étend, avec une couche (71), le long du bord périmétral latéral de ladite cellule céramique (40).

4. Capteur de pression électronique selon l'une quelconque des revendications précédentes, **caractérisé en ce que** les quatre résistances (R1-R4) sont sérigraphiées sur la membrane céramique (41) de la cellule céramique (40).

5. Capteur de pression électronique selon l'une quelconque des revendications précédentes, **caractérisé en ce que** lesdites quatre résistances (R1-R4) sont logées dans une cavité (43) formée sous ladite plaque supérieure (42) de la cellule céramique (40) de manière à pouvoir subir de petits déplacements résultant de la déformation de la membrane au fur et à mesure que la pression du fluide s'évanouit.

6. Capteur de pression électronique selon l'une quelconque des revendications précédentes, **caractérisé en ce que** ledit élément sensible à la pression (41) est en céramique, en composés de verre, en composés métallique, et similaires.

7. Capteur de pression électronique selon l'une quelconque des revendications précédentes, **caractérisé en ce qu'**un joint torique (80), travaillant radialement, est disposé autour d'une tige (34) faisant saillie en bas à partir dudit support mécanique (30) et réalisant l'étanchéité contre une paroi interne dudit corps (20).

8. Capteur de pression électronique selon l'une quelconque des revendications précédentes, dans lequel des trous (33) sont présents dans ladite tige (34) de l'élément de support mécanique (30) pour le passage du fluide vers l'élément sensible à la pression (41).

9. Capteur de pression électronique selon l'une quelconque des revendications précédentes, dans lequel ledit support mécanique (30) est en matière plastique ou métallique.
